Europäisches Patentamt

European Patent Office

Office européen des brevets

(11) Veröffentlichungsnummer: **0 330 754**
**A2**

(19)

(12) **EUROPÄISCHE PATENTANMELDUNG**

(21) Anmeldenummer: **88121175.9**

(22) Anmeldetag: **17.12.88**

(51) Int. Cl.⁴: **F16L 3/04**

(30) Priorität: **29.02.88 DE 3806380**

(43) Veröffentlichungstag der Anmeldung:
**06.09.89 Patentblatt 89/36**

(84) Benannte Vertragsstaaten:
**BE CH DE FR GB IT LI SE**

(71) Anmelder: **Uhde GmbH**
**Friedrich-Uhde-Strasse 15**
**D-4600 Dortmund 1(DE)**

(72) Erfinder: **Wichert, Bernhard, Dipl.-Ing.**
**Feldbergstrasse 20**
**D-6392 Neu Anspach 1(DE)**
Erfinder: **Peine, Klaus-Dieter, Dipl.-Ing.**
**Walter-Kollo-Strasse 47**
**D-6232 Bad Soden(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Fernmanipulierbare Rohrhalterung.**

(57) Bei einer fernmanipulierbaren Rohrhalterung, insbesondere zum Einsatz in hochradioaktiven Bereichen von Kernkraftwerken, Wiederaufbereitungsanlagen oder dgl., soll eine Rohrhalterung geschaffen werden, die zu diesem Einsatzzweck geeignet ist, d.h. die einfach fernzubedienen ist.

Dies wird dadurch erreicht, daß eine an örtlich festgelegten Halteschienen (4) verschraubbare Konsole (2) zur teilweisen Aufnahme des zu befestigenden Rohres sowie durch einen an der Konsole (2) schwenkbar gelagerten Spannhebel, der in Schließrichtung von einer fernbedienbaren Spannschraube beaufschlagt ist, erreicht.

FIG.1

EP 0 330 754 A2

## Fernmanipulierbare Rohrhalterung

Die Erfindung richtet sich auf eine fernmanipulierbare Rohrhalterung, insbesondere zum Einsatz in hochradioaktiven Bereichen von Kernkraftwerken, Wiederaufbereitungsanlagen od. dgl..

Es gibt Einbausituationen von Rohrleitungen, bei denen die Handhabung der Rohrhalterung vom Menschen nicht direkt vorgenommen werden kann, z.B. in radioaktiv gefährdeten Bereichen oder radioaktiv beaufschlagten Bereichen, wie diese in Kernkraftwerken, Wiederaufbereitungsanlagen oder in sonstigen gefährdeten Bereichen vorkommen können. Dabei ist es bekannt, die notwendigen Arbeiten durch Fernbedienungsgeräte, wie Roboter od. dgl., auszuführen bzw. ausführen zu lassen. Hierbei ist es zweckmäßig, alle Montageelemente so zu gestalten, daß sie von derartigen Geräten ohne besondere Probleme gehandhabt werden können.

Aufgabe der Erfindung ist die Schaffung einer Rohrhalterung, die zu diesem Einsatzzweck geeignet ist, d.h. die einfach fernzubedienen ist.

Diese Aufgabe wird gemäß der Erfindung bei einer entsprechenden Rohrhalterung durch eine an örtlich festgelegten Halteschienen verschraubbare Konsole zur teilweisen Aufnahme des zu befestigenden Rohres sowie durch einen an der Konsole schwenkbar gelagerten Spannhebel, der in Schließrichtung von einer fernbedienbaren Spannschraube beaufschlagt ist, gelöst.

Mit dieser Gestaltung ist es möglich, über z.B. einen Roboter oder ein Fernbedienungsgerät das Rohr zunächst auf der Konsole abzulegen, eine erste vorläufige Halterung ist damit gewährleistet. Zum Verspannen der Rohrleitung wird dann der Spannhebel in Schließrichtung vom Bedienungsgerät geschlossen und über die fernbedienbare Spannschraube verschraubt.

In Ausgestaltung der Erfindung ist vorgesehen, daß die Auflagekonsole an einer Befestigungsplatte angeordnet ist, wobei die Befestigungsplatte eine Lagerung für den Spannhebel und eine Lagerung für einen der Spannschraube zugeordneten Gewindebolzen trägt.

Mit dieser Gestaltung läßt sich nicht nur das Rohr selbst über Fernbedienung festlegen, sondern insbesondere auch die gesamte Rohrhalterung mit Hilfe der Befestigungsplatte. Die Befestigungsplatte dient auch als Halteelement für die sonstigen Spanneinrichtungen, wie den Spannhebel selbst und den Gewindebolzen für die Spannschraube, womit alle wesentlichen Elemente der Befestigungsvorrichtung an einem Teil zusammengefaßt sind.

Vorteilhaft ist es, wenn die Auflagekonsole als der Außenkontur des einzuspannenden Rohres angepaßte Halteklaue ausgebildet und der Spannhebel mit einer entsprechend gestalteten Halteklaue ausgerüstet ist. Diese Klauengestaltung ermöglicht ein einfaches Vorabeinlegen des vormontierten Rohres ebenso leicht wie das endgültige Verspannen des eingelegten Rohres, da die Außenkonturen entsprechend angepaßt sind.

Um zusätzlich Rohre sehr unterschiedlicher Durchmesser mit im Prinzip gleichen Vorrichtungen einspannen zu können, sieht die Erfindung in besonders zweckmäßiger Ausgestaltung vor, daß die Halteklauen mit auswechselbaren Spannbacken versehen sind, deren Innendurchmesser dem jeweiligen Außendurchmesser der einzuspannenden Rohrleitung entsprechen. Mit dieser Spannbackengestaltung können die Halteklauen den jeweilig erforderlichen Außendurchmessern der einzuspannenden Rohrleitungen angepaßt werden. Auch läßt sich damit erreichen, daß z.B. beim Auswechseln der Rohrleitungen bei Abweichen der dann eingesetzten Außendurchmesser die gleichen Spannvorrichtungen eingesetzt werden können, es bedarf lediglich des Auswechselns der entsprechenden Spannbacken.

Zweckmäßig ist es, wenn der Drehpunkt des Spannhebels in Schwerkraftsrichtung unterhalb seines Schwerpunktes des Spannhebels derart angeordnet ist, daß der Spannhebel sich bei Lösen der Spannschraube aufgrund der Schwerkraft von selber in Öffnungsstellung bewegt.

Um ein völliges Ausschwenken des Spannhebels zu verhindern kann auch vorgesehen sein, daß an der Befestigungsplatte ein Fangbügel für den Spannhebel zur Begrenzung seines Öffnungswinkels vorgesehen ist.

Schließlich sieht die Erfindung auch vor, daß die Spannschraube als mit Innengewinde versehene Gewindehülse mit Schraubenkopf zum Übergreifen des Gewindebolzens ausgebildet ist, wobei das stirnseitige Ende der Gewindehülse einen definierten Anschlag zur Begrenzung der Spannkraft der Schraube bildet.

Diese Ausgestaltungen der Erfindung sorgen wiederum für eine einfache fernbedienbare Handhabung, insbesondere auch der Spannschraube, da daß Einfädeln einer Gewindehülse über einen ortsfesten Gewindestift vergleichsweise einfach ist und der Anschlag nicht nur die Spannkraft der Schraube zu begrenzen in der Lage ist, sondern auch verhindert, daß das Gewinde möglicherweise durch Überbeanspruchung zerstört wird.

Die Erfindung ist nachstehend anhand der Zeichnung beispielsweise näher erläutert. Diese zeigt in

Fig. 1 eine Seitenansicht der Vorrichtung, teilweise geschnitten,

Fig. 2 einen Detailausschnitt der Spannelemente der Vorrichtung mit eingesetzten Spannbakken,

Fig. 3 eine Aufsicht auf die Vorrichtung gemäß Pfeil III in Fig. 1,

Fig. 4 eine Aufsicht auf die Vorrichtung nach einem abgewandelten Ausführungsbeispiel in der Darstellung gemäß Fig. 3 sowie in

Fig. 5 eine Seitenansicht der Vorrichtung des abgewandelten Ausführungsbeispieles in der Darstellung gemäß Fig. 1.

Die allgemein mit 1 bezeichnete Vorrichtung besteht im wesentlichen aus einer Konsole 2, die über eine Spannschraube an einer querschnittlich etwa C-förmigen Halteschiene 4 in ihrer Höhe verstellbar angeordnet ist. Diese Konsole 2 trägt die Halteelemente für eine nicht näher dargestellte Rohrleitung, wobei diese Halteelemente im wesentlichen aus einer an der Konsole 2 befestigten, z.B. verschweißten, Auflagekonsole 5 und einen schwenkbar gelagerten Spannhebel 6 bestehen. Der Spannhebel 6 ist an der Konsole 2 über eine Lagerung 7 schwenkbar gelagert, wobei die Lagerung 7 relativ zum Spannhebel 6 so angeordnet ist, daß der Schwerpunkt des Spannhebels diesen bei Lösen einer Spannschraube 8 in Öffnungsstellung aufschwenkt.

Zur Festlegung der Spannschraube 8 ist an der Konsole 2 eine Lagerung 9 vorgesehen, z.B. ein Halterohr, was von einer Gewindeschraube 10 durchsetzt wird, die von einer Gewindehülse 11 an der Spannschraube 8 in der Verschlußlage übergriffen wird. Die Stirnseiten der Lagerung 9 und der Gewindehülse 11 korrespondieren in der Gebrauchslage miteinander, hier kann eine Aufschlag- bzw. Distanzscheibe 12 vorgesehen sein.

Um beim Lösen der Spannschraube 8 die Öffnungsstellung des Spannhebels 6 zu begrenzen ist ein Fangbügel 13 vorgesehen, gegen den sich der Spannhebel 6 in Öffnungsstellung legt, ein Durchfallen des Spannhebels 6 nach unten wird damit verhindert, was gerade bei fernbedienbaren Halterungen besonders wichtig ist.

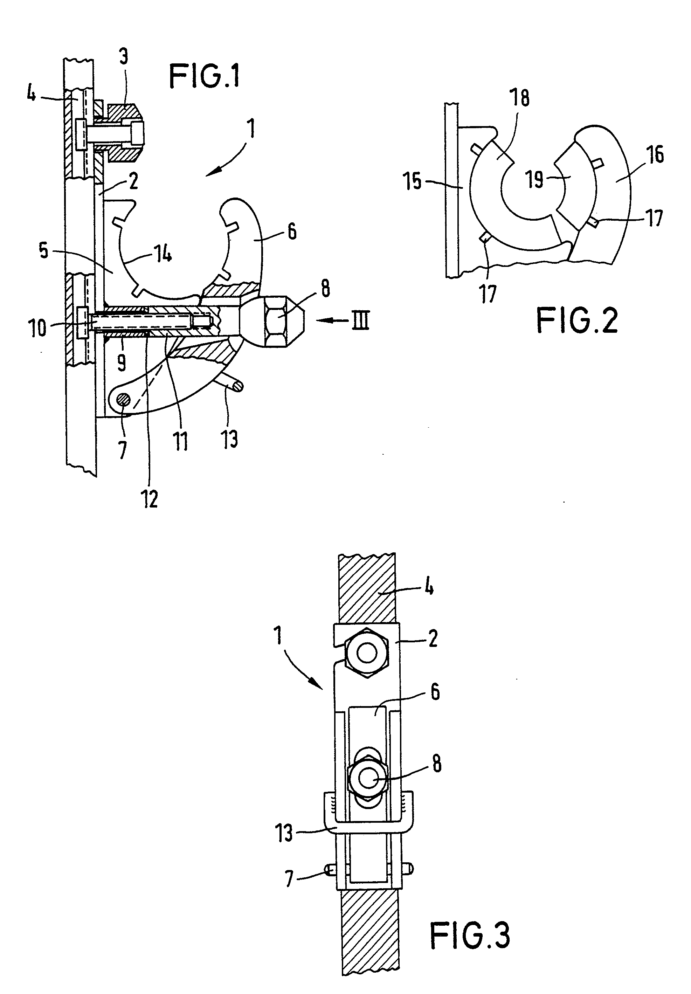

Erkennbar ist die Kontur der Auflagekonsole 5 wie die oberen Bereiche des Spannhebels 6 der Außenkontur eines einzuspannenden Rohres angepaßt, d.h. im wesentlichen kreisausschnittsförmig gestaltet. Die kreisförmig gestalteten Bereiche sowohl der Auflagekonsole 5 als auch des Spannhebels 6 sind in Fig. 2 als Halteklauen 15 und 16 bezeich net.

Diese Halteklauen 15 und 16 tragen Befestigungselemente, wie beispielsweise Stecklöcher oder Steckschlitze 17, in die auswechselbare Spannbacken 18 bzw. 19 einsetzbar sind, mit denen die Halteklauen 15 und 16 dem Außendurchmesser anderer Rohrleitungen angepaßt werden können, wie sich insbesondere aus Fig. 2 ergibt.

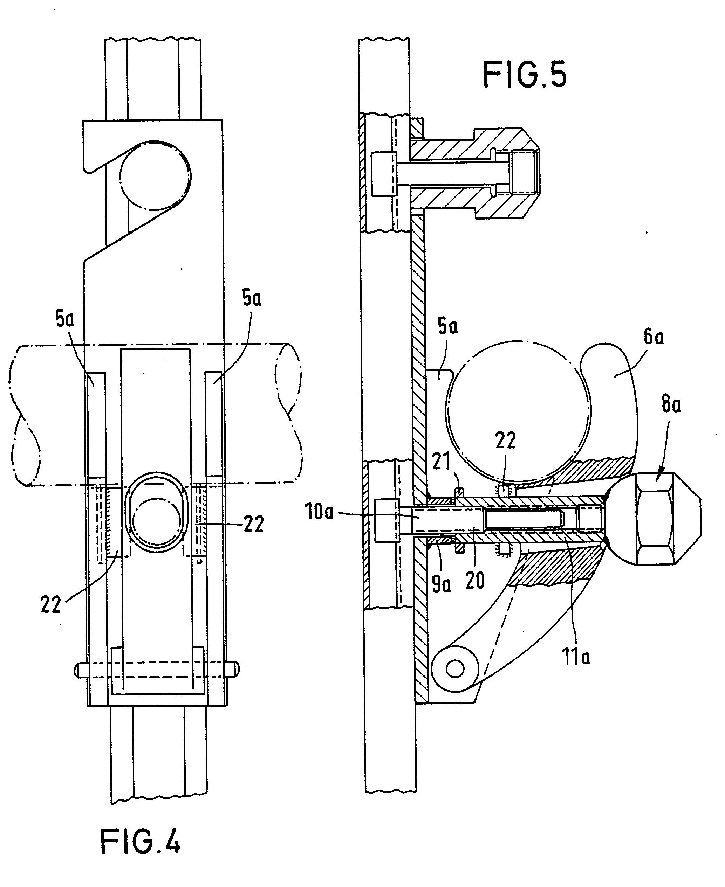

In den Figuren 4 und 5 ist ein abgewandeltes Ausführungsbeispiel dargestellt. Dabei werden soweit wie möglich die gleichen Bezugszeichen benutzt, versehen mit dem kleinen Buchstaben "a".

Um auf den Fangbügel 13 verzichten zu können, ist die Gewindeschraube 10a, die in der Lagerung 9a angeordnet ist, mit einem verkürzten Gewindebereich 20 ausgestattet, der allerdings so lang ist, daß gleichwohl die Gewindehülse 11a der Spannschraube 8a dort eingreifen kann.

Das freie Ende der Gewindehülse 11a trägt einen Anschlagring 21, während ortsfest auf der Innenseite der Auflagekonsolen 5a Anschlagbleche 22 angeschweißt sind, und zwar in einem Bereich, der sich mit dem gewindefreien Bereich der Gewinde schraube 10 deckt.

Wird nun die Spannschraubee 8 gelöst oder dreht das Manipulationswerkzeug in Öffnungsrichtung durch, so wird die Spannschraube 8 vom Gewindebereich 20 abgedreht und gerät in den gewindefreien Bereich, die Anschlagscheibe 21 stützt sich dann an den Anschlagblechen 22 ab, so daß ein vollständiges Abdrehen der Spannschraube 8 verhindert wird.

Natürlich sind die beschriebenen Ausführungsbeispiele der Erfindung noch in vielfacher Hinsicht abzuändern, ohne den Grundgedanken zu verlassen. So ist die Erfindung insbesondere nicht auf die speziell dargestellte Gestaltung des Spannbügels und der Halteklauen mit Spannbacken beschränkt, hier können auch andere geometrische Konfigurationen gewählt werden u. dgl. mehr.

## Ansprüche

1. Fernmanipulierbare Rohrhalterung, insbesondere zum Einsatz in hochradioaktiven Bereichen von Kernkraftwerken, Wiederaufbereitungsanlagen od. dgl.,
gekennzeichnet durch
eine an örtlich festgelegten Halteschienen (4) verschraubbare Konsole (2) zur teilweisen Aufnahme des zu befestigenden Rohres sowie durch einen an der Konsole (2) schwenkbar gelagerten Spannhebel, der in Schließrichtung von einer fernbedienbaren Spannschraube beaufschlagt ist.

2. Vorrichtung nach Anspruch 1,
dadurch gekennzeichnet,
daß die Auflagekonsole an einer Befestigungsplatte angeordnet ist, wobei die Befestigungsplatte eine Lagerung (7) für den Spannhebel (6) und eine Lagerung (9) für einen der Spannschraube zugeordneten Gewindebolzen trägt.

3. Vorrichtung nach Anspruch 1 oder 2,
dadurch gekennzeichnet,
daß die Auflagekonsole (5) als der Außenkontur des einzuspannenden Rohres angepaßte Halteklaue ausgebildet und der Spannhebel (6) mit einer entsprechend gestalteten Halteklaue ausgerüstet ist.

4. Vorrichtung nach Anspruch 3,
dadurch gekennzeichnet,
daß die Halteklauen (15,16) mit auswechselbaren Spannbacken versehen sind, deren Innendurchmesser dem jeweiligen Außendurchmesser der einzuspannenden Rohrleitung entsprechen.

5. Vorrichtung nach einem der vorangehenden Ansprüche,
dadurch gekennzeichnet,
daß der Drehpunkt des Spannhebels in Schwerkraftsrichtung unterhalb seines Schwerpunktes derart angeordnet ist, daß der Spannhebel sich bei Lösen der Spannschraube aufgrund der Schwerkraft von selber in Öffnungsstellung bewegt.

6. Vorrichtung nach Anspruch 5,
dadurch gekennzeichnet,
daß an der Befestigungsplatte ein Fangbügel für den Spannhebel zur Begrenzung seines Öffnungswinkels vorgesehen ist.

7. Vorrichtung nach einem der vorangehenden Ansprüche,
dadurch gekennzeichnet,
daß die Spannschraube als mit Innengewinde versehene Gewindehülse mit Schraubenkopf zum Übergreifen des Gewindebolzens ausgebildet ist, deren stirnseitiges Ende einen definierten Anschlag zur Begrenzung der Spannkraft der Schraube bildet.

FIG.1

FIG.2

FIG.3

FIG.5

5a

6a

8a

22

21

10a

9a  20

11a

5a

5a

22

22

FIG.4